(19) Europäisches Patentamt
European Patent Office
Office européen des brevets

(11) Publication number: **0 432 894 A1**

(12) **EUROPEAN PATENT APPLICATION**

(21) Application number: **90312145.7**

(22) Date of filing: **06.11.90**

(51) Int. Cl.5: **A01N 43/54**, //(A01N43/54, 55:00,47:38,47:34,43:84,43:653, 43:50)

(30) Priority: **07.12.89 JP 316574/89**
**26.01.90 JP 14764/90**
**26.01.90 JP 14765/90**

(43) Date of publication of application:
**19.06.91 Bulletin 91/25**

(84) Designated Contracting States:
**DE FR**

(71) Applicant: **UBE INDUSTRIES, LTD.**
**12-32, Nishihonmachi 1-chome**
**Ube-shi, Yamaguchi-ken 755(JP)**

(72) Inventor: **Iida, Seiji, c/o Ube Research Laboratory**
**Ube Industries Ltd., 1978-5, Oaza Kogushi**
**Ube-shi, Yamaguchi-ken(JP)**
Inventor: **Fujii, Katsutoshi, c/o Ube Research Laboratory**
**Ube Industries Ltd., 1978-5, Oaza Kogushi**
**Ube-shi, Yamaguchi-ken(JP)**

(74) Representative: **Green, Mark Charles et al**
**Urquhart-Dykes & Lord, 91 Wimpole Street**
**London W1M 8AH(GB)**

(54) **Fungicidal composition.**

(57) Aralkylamine derivatives, preparation thereof and bactericides containing the same
Disclosed are a fungicidal composition containing a compound represented by the formula (I):

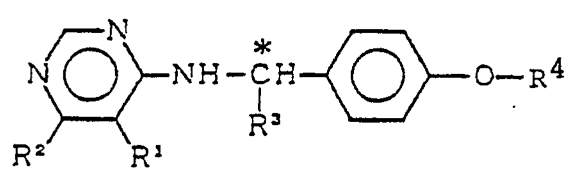

(I)

wherein $R^1$ represents a halogen atom and $R^2$ and $R^3$ each represent a lower alkyl group, and $R^4$ represents

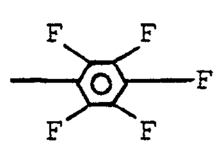

or $-CHF_2$, or an acid addition salt thereof, and at least one fungicide having ergosterol biosynthesis inhibitive activity or cytokinesis inhibitive activity.

EP 0 432 894 A1

# FUNGICIDAL COMPOSITION

## BACKGROUND OF THE INVENTION

The present invention relates to a fungicidal composition.

Developments of novel fungicides are meaningful because longtime use of drugs may cause advent of drug resistance of microorganisms to be terminated.

Accordingly, syntheses of various compounds having fungicidal activity have been conducted, but all the compounds merely having such an activity can not be permitted to be used as an agricultural chemical without delay.

More specifically, environmental pollution has become a big social problem and thus fungicides must satisfy not only fungicidal activity but also safety against creatures such as human being, animals, fishes, etc. before permission of use. Accordingly, it is necessary in the present status to synthesize a compound satisfying fungicidal activity and safety at the same time.

The chemical structure of such satisfactory fungicidal compounds should inevitably be more complicated than conventional ones, resulting in the drawback that the production cost therefor become higher than the conventio nal ones. Accordingly, it is necessary to develop fungicides having higher activity than conventional drugs and use them in a small dosage.

In such a status in developing agricultural compounds, the amount of agricultural compounds used has a tendency toward extremely reduced dosage. As one of means in this tendency, there is prospected a method that not only finds a compound having higher fungicidal activity than conventional fungicides but also reduces the amount of the fungicidal compound by adding a compound which enables to enhance the activity.

## SUMMARY OF THE INVENTION

The fungicidal composition of the present invention was found for the first time by such an intention, and aralkylamine derivatives in the fungicidal composition of the present invention is a compound having extremely high fungicidal activity for preventing, particularly, mildews and rusts of cereals as the present inventors have indicated in Japanese Patent Application No. 201245/1989. The material which enhances the fungicidal activity of the derivatives is a fungicidal compound having ergosterol biosynthesis inhibitive activity or cytokinesis inhibitive activity.

The aralkylamine derivatives represented by the formula (I') shown below in the fungicidal composition of the present invention was found by the present inventors as indicated in Japanese Patent Application No. 292444/1988 and is the fungicide having extremely high fungicidal activity for preventing, particularly, mildews and rusts of cereals.

The fungicides having ergosterol biosynthesis inhibitive activity or cytokinesis inhibitive activity have been widely used in the world because these were effective to diseases in wide ranges in a small drug amount. As a result, advent of resistant fungi against these fungicides has appeared and brought about big problems.

Although the compound of the formula (I) or an acid addition salt thereof can be used as a single agent, the present inventors have found that the combination of the compound of the formula (I) with a fungicide having ergosterol biosynthesis inhibitive activity or cytokinesis inhibitive activity can provide a fungicidal composition which is effective to even fungi possessing resistance to a single compound of them and is difficult to cause an advent of fungicidal resistance thereto, and also has wide fungicidal spectrum, and that synergistic effect can be shown by the combination of both compounds, and accomplished the present invention.

The present invention is a fungicidal composition containing a compound represented by the formula (I):

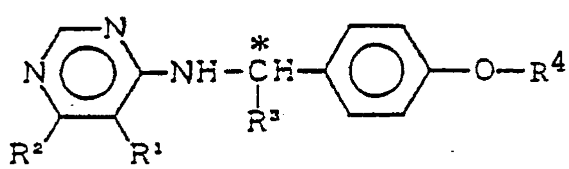

(I)

wherein $R^1$ represents a halogen atom and $R^2$ and $R^3$ each represent a lower alkyl group, and $R^4$ represents

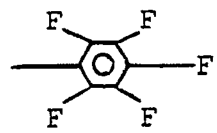

or $-CHF_2$, or an acid addition salt thereof, and at least one fungicide having ergosterol biosynthesis inhibitive activity or cytokinesis inhibitive activity.

DESCRIPTION OF THE PREFERRED EMBODIMENTS

In the above formula (I), the halogen atom may include fluorine, chlorine, bromine and iodine, preferably chlorine and fluorine.

The lower alkyl group may include straight chain or branched alkyl groups having 1 to 4 carbon atoms, particularly methyl or ethyl.

Among the compounds of the formula (I), preferred are as shown below.

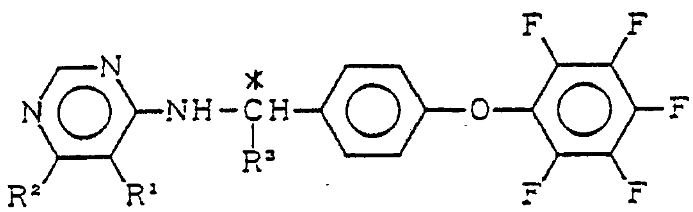

(I')

dl-5-Chloro-6-ethyl-4-(α-ethyl-4-pentafluorophenoxybenzyl-amino)pyrimidine (m.p. 57 - 59 °C) (hereinafter, referred to as Compound No. 1)

dl-5-Chloro-6-methyl-4-(α-ethyl-4-pentafluorophenoxybenzyl-amino)pyrimidine (m.p. 118 - 121 °C) (hereinafter, Compound No. 2)

dl-5-Fluoro-6-methyl-4-(α-methyl-4-pentafluorophenoxybenzyl--amino)pyrimidine (m.p. 117 - 119 °C) (hereinafter, Compound No. 3)

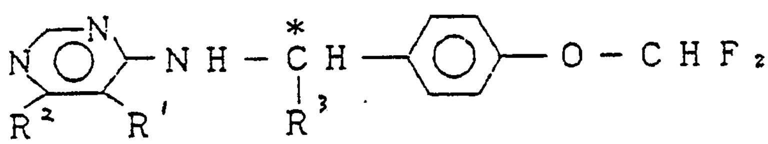

(I")

dl-5-Chloro-6-methyl-4-(α-ethyl-4-difluoromethoxybenzyl-amino)pyrimidine (m.p. 48 to 50 °C) (hereinafter, Compound No. 4)

dl-5-Chloro-6-methyl-4-(α-methyl-4-difluoromethoxybenzyl-amino)pyrimidine (m.p. 56 - 58 °C) (hereinafter, Compound No. 5)

dl-5-Chloro-6-ethyl-4-(α-methyl-4-difluoromethoxybenzyl-amino)pyrimidine ( $n_D^{30.0}$ 1.5442) (hereinafter, Compound No. 6)

As can be understood from the above formulae (I), (I') and (I"), the compound of the present invention has an amino group, forms readily an acid addition salt and such salts are also included within the present invention.

As the acid for forming acid addition salt, there may be included, for example, inorganic acids such as hydrochloric acid, hydrobromic acid, nitric acid, sulfuric acid and phosphoric acid; carboxylic acids such as formic acid, oxalic acid, fumaric acid, adipic acid, stearic acid, oleic acid and aconitic acid; organic sulfonic acids such as methanesulfonic acid, benzenesulfonic acid and p-toluene-sulfonic acid; saccharin and the like.

In the above formula (I), (I') and (I"), when the carbon atom with the mark * is asymmetric carbon, individual optical isomers and racemic compounds or mixtures of them are all included within the present invention.

The compound (I') of the present invention can be easily prepared acccrding to a process which is known per se as shown below.

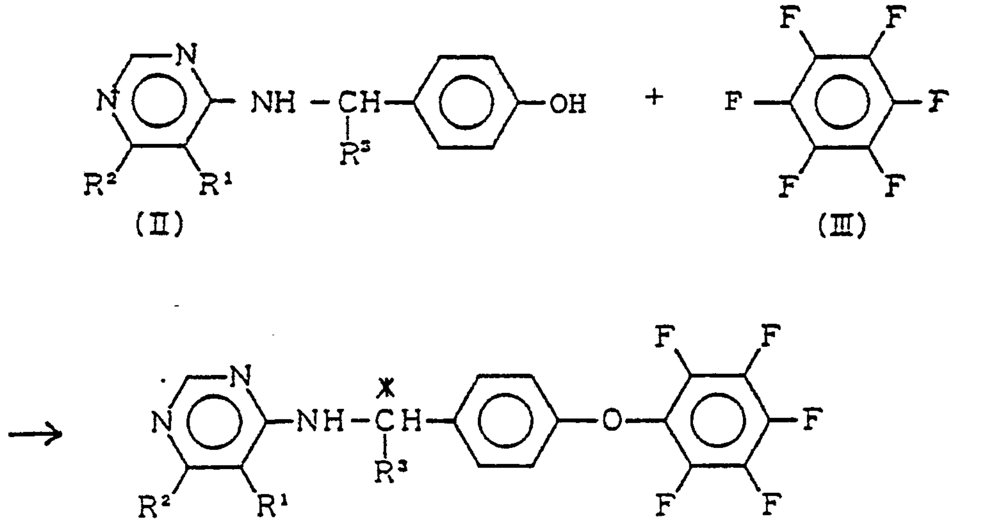

(II) (III) (I')

(wherein $R^1$, $R^2$ and $R^3$ have the same meanings as defined above).

As is apparent from the above reaction scheme, since the compound H-X is eliminated in the present reaction, in order to permit the reaction to proceed smoothly by trapping this, it is preferable to carry out the reaction in the presence of a base. The reaction is generally carried out in the presence of a solvent, but it is also possible to carry out the reaction by heating and melting the compounds of the formula (II) and the formula (III).

The solvent is not particularly limited, provided that it does not participate in the present reaction, and may include, for example, amides such as N,N-dimethylformamide (DMF) and N,N-dimethylacetamide (DMA); organic bases such as pyridine and N,N-dimethylaniline; 1,3-dimethyl-2-imidazoli-dinone (DMI); dimethyl sulfoxide (DMSO); and mixtures of the above solvents, etc.

As the base, there may be included inorganic bases such as sodium hydroxide, potassium hydroxide, sodium carbonate, potassium carbonate, etc.

Also, for increasing the reaction rate, it is preferable to add 4-(N,N-dimethylamino)pyridine as the catalyst.

The reaction temperature is not particularly limited, but generally room temperature or higher and not higher than the boiling point of the solvent used, and it is preferable to heat the reaction mixture for shortening the reaction time.

The acid addition salt can easily be obtained by, for example, introducing an acid into the resulting solution after completion of the reaction and subsequently removing the solvent.

The compound of the formula (I") of the present invention can be easily prepared according to the description in Japanese Patent Application No. 201245/1989, and acid addition salts thereof can also be easily obtained by adding an appropriate acid into the resulting solution after completion of the reaction and removing the solvent as shown below:

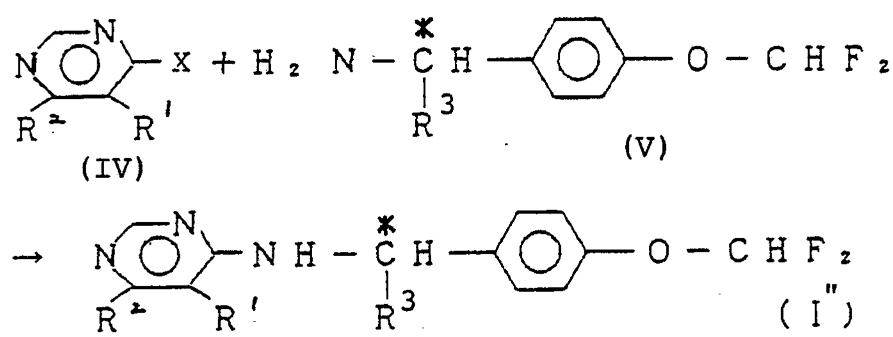

(IV) (V) (I")

(wherein $R^1$, $R^2$ and $R^3$ have the same meanings as defined above and X represents an eliminable group).

This reaction is known per se , and the eliminable group X is not limited at all, but may include, for example, halogen atoms such as chlorine, bromine or iodine; alkylthio groups such as methylthio, ethylthio, propylthio and butylthio; alkanesulfonyloxy groups which may be also substituted with halogen such as methanesulfonyloxy, ethanesulfonyloxy and trifluoromethanesulfonyloxy; arylsulfonyloxy groups such as benzenesulfonyloxy and p-toluenesulfonyloxy, etc., hydroxyl group and others.

The compounds having ergosterol biosynthesis inhibitive activity are as shown below.

[Azole type]

Triadimefon (Compound No. A)

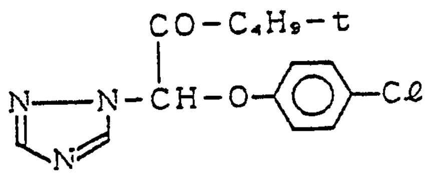

Hexaconazole (Compound No. B)

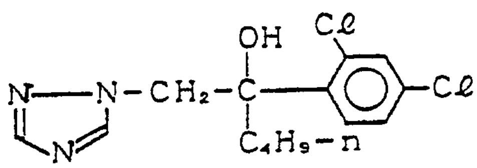

Flusirazole (Compound No. C)

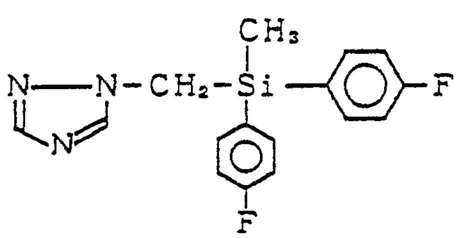

Propiconazole (Compound No. D)

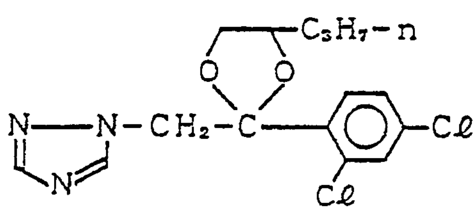

Ethaconazole (Compound No. E)

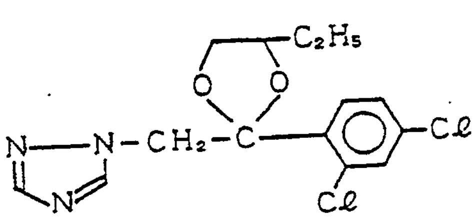

Prochloraz (Compound No. F)

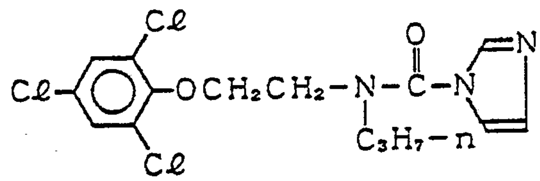

Triflumizole (Compound No. G)

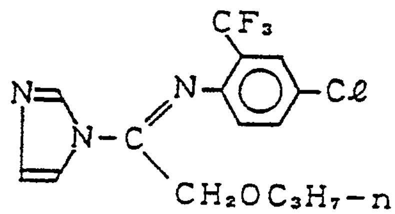

[Morpholine type]
Dodemorph (Compound No. H)

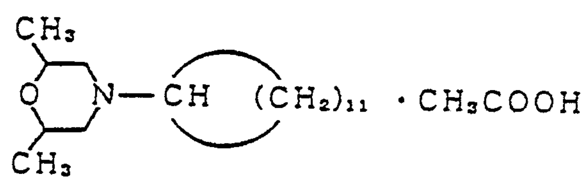

Tridemorph (Compound No. I)

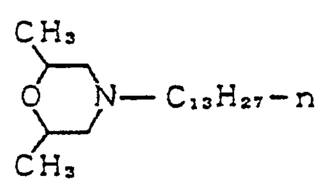

Fenpropimorph (Compound No. J)

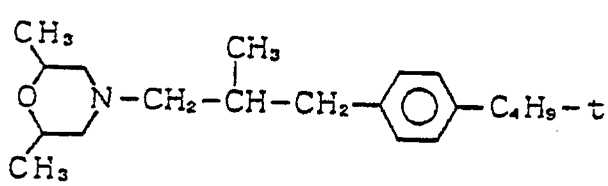

The compounds having cytokinesis inhibitive activity are as shown below.
[Allophanate type]
Thiophanatemethyl (Compound No. K)

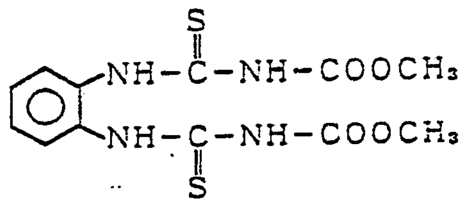

[Berezimidazole type]
Benomyl (Compound No. L)

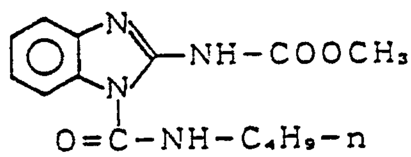

The fungicidal composition of the present invention can be obtained by combining the compound of the formula (I) with the fungicides having ergosterol biosynthesis inhibitive activity or cytokinesis inhibitive activity, and prepared according to conventional method into, for example, a composition such as powder, emulsion, fine particle, granule, wettable agent or oily suspension, aerosol, etc. before use.

As the active ingredient concentration in the fungicidal composition of the present invention, the fungicides having ergosterol biosynthesis inhibitive activity or cytokinesis inhibitive activity can be incorporated in the ratio of 0.1 to 10, preferably 1 to 5 to 1 of the compound of the formula (I). The total amount of both active ingredients of the fungicidal composition is generally 1 to 50 % by weight for emulsion, generally 0.3 to 25 % by weight for powder, generally 1 to 90 % by weight for wettable agent, generally 0.5 to 5 % by weight for granule, generally 0.5 to 5 % by weight for oil agent, and generally 0.1 to 5 % by weight for aerosol.

These preparations are diluted to appropriate concentrations, and can be provided for various uses by spraying on the vegetable stalk and leave, soil, water surface of paddle field, or by way of direct application.

The present invention is described below in more detail by referring to examples and reference examples, but these examples are not limitative of the scope of the present invention at all.

Reference example 1

Synthesis of dl-5-chloro-6-ethyl-4-(α-ethyl-4-penta-fluorophenoxybenzylamino)pyrimidine (Compound No. 1)

A mixture of 0.3 g of potassium hydroxide and 30 ml of dimethyl sulfoxide was heated under stirring at 100 °C for 30 minutes, then cooled to 50 °C, and 1 g of dl-5-chloro-6-ethyl-4-(α-ethyl-4-hydroxybenzylamino)pyrimidine was added, followed by stirring for 30 minutes. To this solution was added 1 g of hexafluorobenzene, and the reaction was carried out at 70 °C for 8 hours. After completion of the reaction, the reaction mixture was poured into water, and extracted with toluene. The extract was washed with water, dried over anhydrous sodium sulfate and then toluene was evaporated under reduced pressure. The oily product obtained was isolated by column chromatography (Wako gel C-200, eluted with toluene:ethyl acetate = 10:1) to give 1 g of the desired product as colorless crystals.

m.p. 57 - 59 °C

Example 1

10 parts by weight of Compounds Nos. A to J were each mixed uniformly with 88 parts by weight of Kaolin and 2 parts by weight of Neopelex powder (trade name; manufactured by Kao Atlas) and then pulverized to obtain respective wettable powders.

Example 2

Control activity test against wheat brown rust

In plastic planting pots of 6 cm in diameter, ten wheats (species: Kobushikomugi) were grown per each pot. Predetermined amounts of the wettable powders of single compounds and mixtures of Compounds

Nos. 1, 2 and 3 and Compounds Nos. A to J shown in Table 1 were prepared similarly as in Example 1 and diluted with water containing a surfactant (0.01 %) to obtain mixtures having a predetermined active ingredient concentration.

After spraying of 20 ml of each prepared solution onto 3 pots of young plants at the 1.5 leaf stage, the plants were placed in a glass house for 2 days, and then a wheat brown rust (Puccinia recondita) spore suspension (7 x $10^4$ spores/ml) was uniformly inoculated by spraying thereon.

After inoculation, the plants were placed in a thermostat at 20 °C with a relative humidity of 100 % for 20 hours and then grown in a glass house for one week at 20 °C, and the extent of the wheat brown rust lesion appeared on the first leave was examined. The drug effect was judged by comparison with the extent of the non-treated group.

Evaluation is shown by the 6 ranks of 5 to 0, and one without lesion being rated as 5, one with lesion area of 10 % or less as compared with the non-treated group as 4, about 20 % as 3, about 40 % as 2, about 60 % as 1, and one which is wholly afflicted with the disease as 0. The results are shown in Table 1.

Table 1

(Control activity test against wheat brown rust)

| Test Compound No. | Distributed concentration (active ingredient: ppm) | Activity | Chemical injury |
|---|---|---|---|
| (Single application) | | | |
| Compound 1 | 10 | 2 | None |
| Compound 2 | 10 | 2 | None |
| Compound 3 | 10 | 2 | None |
| Compound A | 20 | 1 | None |
| Compound B | 10 | 2 | None |
| Compound C | 10 | 2 | None |
| Compound D | 10 | 2 | None |
| Compound E | 10 | 2 | None |
| Compound F | 20 | 1 | None |
| Compound G | 20 | 1 | None |
| Compound H | 30 | 1 | None |
| Compound I | 50 | 1 | None |
| Compound J | 10 | 2 | None |
| (This invention's area) | | | |
| Compound 1 + Compound A | 10 + 20 | 5 | None |
| Compound 1 + Compound A | 5 + 10 | 5 | None |

Table 1 (Cont'd)

| Test Compound No. | Distributed concentration (active ingredient: ppm) | Activity | Chemical injury |
|---|---|---|---|
| Compound 2 + Compound A | 10 + 20 | 5 | None |
| Compound 2 + Compound A | 5 + 10 | 5 | None |
| Compound 3 + Compound A | 10 + 20 | 5 | None |
| Compound 3 + Compound A | 5 + 10 | 5 | None |
| Compound 1 + Compound B | 10 + 10 | 5 | None |
| Compound 1 + Compound B | 5 + 5 | 5 | None |
| Compound 2 + Compound B | 10 + 10 | 5 | None |
| Compound 2 + Compound B | 5 + 5 | 5 | None |
| Compound 3 + Compound B | 10 + 10 | 5 | None |
| Compound 3 + Compound B | 5 + 5 | 5 | None |
| Compound 1 + Compound C | 10 + 10 | 5 | None |
| Compound 1 + Compound C | 5 + 5 | 5 | None |
| Compound 2 + Compound C | 10 + 10 | 5 | None |
| Compound 2 + Compound C | 5 + 5 | 5 | None |
| Compound 3 + Compound C | 10 + 10 | 5 | None |
| Compound 3 + Compound C | 5 + 5 | 5 | None |
| Compound 1 + Compound D | 10 + 10 | 5 | None |
| Compound 1 + Compound D | 5 + 5 | 5 | None |
| Compound 2 + Compound D | 10 + 10 | 5 | None |
| Compound 2 + Compound D | 5 + 5 | 5 | None |

Table 1 (Cont'd)

| Test Compound No. | Distributed concentration (active ingredient: ppm) | Activity | Chemical injury |
|---|---|---|---|
| Compound 3 + Compound D | 10 + 10 | 5 | None |
| Compound 3 + Compound D | 5 + 5 | 5 | None |
| Compound 1 + Compound E | 10 + 10 | 5 | None |
| Compound 1 + Compound E | 5 + 5 | 5 | None |
| Compound 2 + Compound E | 10 + 10 | 5 | None |
| Compound 2 + Compound E | 5 + 5 | 5 | None |
| Compound 3 + Compound E | 10 + 10 | 5 | None |
| Compound 3 + Compound E | 5 + 5 | 5 | None |
| Compound 1 + Compound F | 10 + 20 | 5 | None |
| Compound 1 + Compound F | 5 + 10 | 5 | None |
| Compound 2 + Compound F | 10 + 20 | 5 | None |
| Compound 2 + Compound F | 5 + 10 | 5 | None |
| Compound 3 + Compound F | 10 + 20 | 5 | None |
| Compound 3 + Compound F | 5 + 10 | 5 | None |
| Compound 1 + Compound G | 10 + 20 | 5 | None |
| Compound 1 + Compound G | 5 + 10 | 5 | None |
| Compound 2 + Compound G | 10 + 20 | 5 | None |
| Compound 2 + Compound G | 5 + 10 | 5 | None |
| Compound 3 + Compound G | 10 + 20 | 5 | None |
| Compound 3 + Compound G | 5 + 10 | 5 | None |

Table 1 (Cont'd)

| Test Compound No. | Distributed concentration (active ingredient: ppm) | Activity | Chemical injury |
|---|---|---|---|
| Compound 1 + Compound H | 10 + 30 | 5 | None |
| Compound 1 + Compound H | 5 + 15 | 5 | None |
| Compound 2 + Compound H | 10 + 30 | 5 | None |
| Compound 2 + Compound H | 5 + 15 | 5 | None |
| Compound 3 + Compound H | 10 + 30 | 5 | None |
| Compound 3 + Compound H | 5 + 15 | 5 | None |
| Compound 1 + Compound I | 10 + 50 | 5 | None |
| Compound 1 + Compound I | 5 + 25 | 5 | None |
| Compound 2 + Compound I | 10 + 50 | 5 | None |
| Compound 2 + Compound I | 5 + 25 | 4 | None |
| Compound 3 + Compound I | 10 + 50 | 5 | None |
| Compound 3 + Compound I | 5 + 25 | 4 | None |
| Compound 1 + Compound J | 10 + 10 | 5 | None |
| Compound 1 + Compound J | 5 + 5 | 5 | None |
| Compound 2 + Compound J | 10 + 10 | 5 | None |
| Compound 2 + Compound J | 5 + 5 | 5 | None |
| Compound 3 + Compound J | 10 + 10 | 5 | None |
| Compound 3 + Compound J | 5 + 5 | 5 | None |

Example 3

Control activity test against barley powdery mildew

In plastic planting pots of 6 cm in diameter, ten barleys (species: Black barley) were grown per each pot. Predetermined amounts of the wettable powders of single compounds and mixtures of Compounds Nos. 1, 2 and 3 and Compounds Nos. A to L shown in Table 2 were prepared similarly as in Example 1 and diluted with water containing a surfactant (0.01 %).

As Compound No. K, "Topjin M wettable powder" (manufactured by Hokko Kagaku Kogyo K.K.; Active

ingredient = 70 %) was used. As Compound No. L, "Benlate wettable powder" (manufactured by Du Pond Co.; Active ingredient = 50 %) was used.

After spraying of each 20 ml of these solution prepared were each sprayed onto 3 pots of young plants at the 1.5 stage, the plants were placed in a glass house for 2 days, and then barley powdery mildew (Erysiphae graminis) conidial spores were collected from the afflicted leaves, which were sprayed uniformly on the plants to effect inoculation.

After inoculation, the plants were grown in a glass house for 7 days at 20 °C, and the extent of the barley powdery mildew lesion appeared on the first leave was examined. The drug effect was judged by comparison with the extent of the non-treated group.

Evaluation is shown by the 6 ranks of 5 to 0, and one without lesion being rated as 5, one with lesion area of 10 % or less as compared with the non-treated group as 4, about 20 % as 3, about 40 % as 2, about 60 % as 1, and one which is wholly afflicted with the disease as 0. The results are shown in Table 2.

Table 2

(Control activity test against barley powdery mildew)

| Test Compound No. | Distributed concentration (active ingredient: ppm) | Activity | Chemical injury |
|---|---|---|---|
| (Single application area) | | | |
| Compound 1 | 10 | 2 | None |
| Compound 2 | 10 | 2 | None |
| Compound 3 | 10 | 2 | None |
| Compound A | 20 | 2 | None |
| Compound B | 10 | 2 | None |
| Compound C | 10 | 2 | None |
| Compound D | 10 | 2 | None |
| Compound E | 10 | 2 | None |
| Compound F | 20 | 2 | None |
| Compound G | 20 | 2 | None |
| Compound H | 30 | 2 | None |
| Compound I | 50 | 2 | None |
| Compound J | 10 | 2 | None |
| Compound K | 50 | 2 | None |
| Compound L | 50 | 1 | None |

Table 2 (Cont'd)

| Test Compound No. | Distributed concentration (active ingredient: ppm) | Activity | Chemical injury |
|---|---|---|---|
| (This invention's area) | | | |
| Compound 1 + Compound A | 10 + 20 | 5 | None |
| Compound 1 + Compound A | 5 + 10 | 5 | None |
| Compound 2 + Compound A | 10 + 20 | 5 | None |
| Compound 2 + Compound A | 5 + 10 | 5 | None |
| Compound 3 + Compound A | 10 + 20 | 5 | None |
| Compound 3 + Compound A | 5 + 10 | 5 | None |
| Compound 1 + Compound B | 10 + 10 | 5 | None |
| Compound 1 + Compound B | 5 + 5 | 5 | None |
| Compound 2 + Compound B | 10 + 10 | 5 | None |
| Compound 2 + Compound B | 5 + 5 | 4 | None |
| Compound 3 + Compound B | 10 + 10 | 5 | None |
| Compound 3 + Compound B | 5 + 5 | 5 | None |
| Compound 1 + Compound C | 10 + 10 | 5 | None |
| Compound 1 + Compound C | 5 + 5 | 5 | None |
| Compound 2 + Compound C | 10 + 10 | 5 | None |
| Compound 2 + Compound C | 5 + 5 | 5 | None |
| Compound 3 + Compound C | 10 + 10 | 5 | None |
| Compound 3 + Compound C | 5 + 5 | 5 | None |
| Compound 1 + Compound D | 10 + 10 | 5 | None |
| Compound 1 + Compound D | 5 + 5 | 5 | None |

Table 2 (Cont'd)

| Test Compound No. | Distributed concentration (active ingredient: ppm) | Activity | Chemical injury |
|---|---|---|---|
| Compound 2 + Compound D | 10 + 10 | 5 | None |
| Compound 2 + Compound D | 5 + 5 | 5 | None |
| Compound 3 + Compound D | 10 + 10 | 5 | None |
| Compound 3 + Compound D | 5 + 5 | 5 | None |
| Compound 1 + Compound E | 10 + 10 | 5 | None |
| Compound 1 + Compound E | 5 + 5 | 5 | None |
| Compound 2 + Compound E | 10 + 10 | 5 | None |
| Compound 2 + Compound E | 5 + 5 | 5 | None |
| Compound 3 + Compound E | 10 + 10 | 5 | None |
| Compound 3 + Compound E | 5 + 5 | 5 | None |
| Compound 1 + Compound F | 10 + 20 | 5 | None |
| Compound 1 + Compound F | 5 + 10 | 5 | None |
| Compound 2 + Compound F | 10 + 20 | 5 | None |
| Compound 2 + Compound F | 5 + 10 | 4 | None |
| Compound 3 + Compound F | 10 + 20 | 5 | None |
| Compound 3 + Compound F | 5 + 10 | 4 | None |
| Compound 1 + Compound G | 10 + 20 | 5 | None |
| Compound 1 + Compound G | 5 + 10 | 5 | None |
| Compound 2 + Compound G | 10 + 20 | 5 | None |
| Compound 2 + Compound G | 5 + 10 | 5 | None |

Table 2 (Cont'd)

| Test Compound No. | Distributed concentration (active ingredient: ppm) | Activity | Chemical injury |
|---|---|---|---|
| Compound 3 + Compound G | 10 + 20 | 5 | None |
| Compound 3 + Compound G | 5 + 10 | 5 | None |
| Compound 1 + Compound H | 10 + 30 | 5 | None |
| Compound 1 + Compound H | 5 + 15 | 5 | None |
| Compound 2 + Compound H | 10 + 30 | 5 | None |
| Compound 2 + Compound H | 5 + 15 | 4 | None |
| Compound 3 + Compound H | 10 + 30 | 5 | None |
| Compound 3 + Compound H | 5 + 15 | 5 | None |
| Compound 1 + Compound I | 10 + 50 | 5 | None |
| Compound 1 + Compound I | 5 + 25 | 5 | None |
| Compound 2 + Compound I | 10 + 50 | 5 | None |
| Compound 2 + Compound I | 5 + 25 | 4 | None |
| Compound 3 + Compound I | 10 + 50 | 5 | None |
| Compound 3 + Compound I | 5 + 25 | 4 | None |
| Compound 1 + Compound J | 10 + 10 | 5 | None |
| Compound 1 + Compound J | 5 + 5 | 5 | None |
| Compound 2 + Compound J | 10 + 10 | 5 | None |
| Compound 2 + Compound J | 5 + 5 | 5 | None |
| Compound 3 + Compound J | 10 + 10 | 5 | None |
| Compound 3 + Compound J | 5 + 5 | 5 | None |

Table 2 (Cont'd)

| Test Compound No. | Distributed concentration (active ingredient: ppm) | Activity | Chemical injury |
|---|---|---|---|
| Compound 1 + Compound K | 10 + 50 | 5 | None |
| Compound 1 + Compound K | 5 + 25 | 5 | None |
| Compound 2 + Compound K | 10 + 50 | 5 | None |
| Compound 2 + Compound K | 5 + 25 | 4 | None |
| Compound 3 + Compound K | 10 + 50 | 5 | None |
| Compound 3 + Compound K | 5 + 25 | 4 | None |
| Compound 1 + Compound L | 10 + 50 | 5 | None |
| Compound 1 + Compound L | 5 + 25 | 4 | None |
| Compound 2 + Compound L | 10 + 50 | 5 | None |
| Compound 2 + Compound L | 5 + 25 | 4 | None |
| Compound 3 + Compound L | 10 + 50 | 5 | None |
| Compound 3 + Compound L | 5 + 25 | 4 | None |

Example 4

Control activity against cucumber powdery mildew by using resistant strain and sensitive strain

In plastic planting pots of 6 cm in diameter, one cucumber (species: Sagamihanjiro Tokinari) was grown per each pot. Predetermined amounts of the wettable powders of single compounds and mixtures of Compound Nos. 1, 2 and 3 and Compound Nos. A, D and K were prepared similarly as in Example 1 and diluted with water containing a surfactant (0.01 %) to obtain mixtures having the predetermined active ingredient concentration.

As Compound No. K, Topjin M wettable powder (manufactured by Hokko Kagaku Kogyo K.K.; Active ingredient = 70 %) was used.

After spraying of 20 ml of the prepared solution for each 3 pots of young plants after 15 days from seeding, the plants were placed in a glass house for 2 days. Then, subcultured cucumber powdery mildew (Sphaerotheca fuliginea) showing resistance to Compounds Nos. A, D and K and those showing sensitivity thereto were prepared to be 100,000 spores/ml in spores concentration, which were then sprayed uniformly on the stalk and leave of the plants in an amount of 1 ml per one pot to effect inoculation.

After inoculation, the plants were grown in a glass house for 10 days, and the extent of the cucumber powdery mildew lesion appeared on the first leave was examined. The drug effect was judged by the calculation method as shown below. The results are shown in Table 3.

$$\text{Control percentage (\%)} = \left[1 - \frac{\text{Average lesion number in treated area}}{\text{Average lesion number in non-treated area}}\right] \times 100$$

Table 3

(Control activity against cucumber downy mildew)

| Test compound No. | Distributed concentration (Active ingresient: ppm) | Control percentage (%) Resistant strain | Sensitive strain | Chemical injury |
|---|---|---|---|---|
| (Single application area) | | | | |
| Compound 1 | 16 | 100 | 100 | None |
| Compound 1 | 8 | 60 | 56 | None |
| Compound 1 | 4 | 35 | 38 | None |
| Compound 2 | 16 | 100 | 100 | None |
| Compound 2 | 8 | 62 | 54 | None |
| Compound 2 | 4 | 37 | 33 | None |
| Compound 3 | 16 | 100 | 100 | None |
| Compound 3 | 8 | 66 | 60 | None |
| Compound 3 | 4 | 36 | 31 | None |
| Compound A | 20 | 8 | 100 | Growth retardation |
| Compound A | 10 | 5 | 63 | None |
| Compound A | 5 | 3 | 51 | None |

Table 3 (Cont'd)

| Test compound No. | Distributed concentration (Active ing-resient: ppm) | Control percentage (%) | | Chemical injury |
|---|---|---|---|---|
| | | Resistant strain | Sensitive strain | |
| Compound D | 20 | 27 | 100 | Growth retar-dation |
| Compound D | 10 | 11 | 80 | None |
| Compound D | 5 | 6 | 56 | None |
| Compound K | 80 | 31 | 91 | None |
| Compound K | 40 | 19 | 72 | None |
| Compound K | 20 | 4 | 46 | None |
| (This invention's area) | | | | |
| Compound 1 + Compound A | 8 + 20 | 100 | 100 | None |
| Compound 1 + Compound A | 4 + 10 | 97 | 96 | None |
| Compound 2 + Compound A | 8 + 20 | 100 | 100 | None |
| Compound 2 + Compound A | 4 + 10 | 95 | 93 | None |
| Compound 3 + Compound A | 8 + 20 | 100 | 100 | None |
| Compound 3 + Compound A | 4 + 10 | 97 | 97 | None |

Table 3 (Cont'd)

| Test compound No. | Distributed concentration (Active ingresient: ppm) | Control percentage (%) Resistant strain | Sensitive strain | Chemical injury |
|---|---|---|---|---|
| Compound 1 + Compound D | 8 + 20 | 100 | 100 | None |
| Compound 1 + Compound D | 4 + 10 | 100 | 100 | None |
| Compound 2 + Compound D | 8 + 20 | 100 | 100 | None |
| Compound 2 + Compound D | 4 + 10 | 98 | 100 | None |
| Compound 3 + Compound D | 8 + 20 | 100 | 100 | None |
| Compound 3 + Compound D | 4 + 10 | 99 | 100 | None |
| Compound 1 + Compound K | 8 + 40 | 100 | 100 | None |
| Compound 1 + Compound K | 4 + 20 | 96 | 92 | None |
| Compound 2 + Compound K | 8 + 40 | 100 | 100 | None |
| Compound 2 + Compound K | 4 + 20 | 92 | 95 | None |
| Compound 3 + Compound K | 8 + 40 | 100 | 100 | None |
| Compound 3 + Compound K | 4 + 20 | 96 | 99 | None |

As will be apparent from the above results, the fungicidal composition of the present invention shows superior control percentage to the case using a single compound of the compounds of the formula (I) and Compound Nos. A to L, and thus shows synergistic effect of these compounds.

Reference example 2

Synthesis of dl-5-chloro-6-methyl-4-(α-ethyl-4-difluoromethoxybenzylamino)pyrimidine (Compound No. 4)

To a mixture of 0.9 g of 4,5-dichloro-6-methylpyrimidine, 1.0 g of dl-α-ethyl-4-difluoromethoxybenzylamine and 1 ml of triethylamine dissolved in 20 ml of toluene was added a catalytic amount of 4-(N,N-dimethylamino)pyrimidine, followed by heating for 8 hours under reflux.

After the reaction, the reaction solution was washed with water and dried over anhydrous sodium sulfate, and the toluene was evaporated under reduced pressure.

The oily product obtained was isolated by column chromatography (Wako gel C-200, eluted with toluene:ethyl acetate = 15:1) to give 1.2 g of the desired Compound No. 4 as colorless crystals.

Reference example 3

Synthesis of dl-5-chloro-6-methyl-4-(α-methyl-4-difluoromethoxybenzylamino)pyrimidine (Compound No. 5)

The procedure of Reference example 2 was repeated provided that dl-α-methyl-4-difluoromethoxybenzylamine was used in place of dl-α-ethyl-4-difluoromethoxybenzylamine to obtain 1.1 g of the desired Compound No. 5

Reference example 4

Synthesis of dl-5-chloro-6-ethyl-4-(α-methyl-4-difluoromethoxybenzylamino)pyrimidine (Compound No. 6)

The procedure of Reference example 2 was repeated provided that 4,5-dichloro-6-ethylpyrimidine was used in place of 4,5-dichloro-6-methylpyrimidine and dl-α-methyl-4-difluoromethoxybenzylamine was used in place of dl-α-ethyl-4-difluoromethoxybenzylamine to obtain 1.2 g of the desired Compound No. 6

Example 5 (Preparation of wettable powder)

10 parts by weight of fungicidal compounds Nos. A to J having ergosterol biosynthesis inhibitive activity were each mixed uniformly with 88 parts by weight of Kaolin and 2 parts by weight of Neopelex powder (trade name; manufactured by Kao Atlas) and then pulverized to obtain respective wettable powders.

Example 6

Control activity (preventive activity) test against wheat brown rust

Predetermined amounts of the wettable powders prepared in Example 5 were diluted with a solution containing a surfactant (0.01 %) to obtain respective solution of Compounds Nos. A to J. These solutions were mixed with Compounds Nos. 4, 5 or 6 to prepare fungicidal compositions and used for the tests shown below in the predetermined active ingredient concentration as shown in Table 4.

In plastic planting pots of 6 cm in diameter, ten wheats (species: Kobushikomugi) were grown per each pot until the 1.5 leaf stage young plant.

These solutions of the fungicidal compositions with the predetermined active ingredient concentration prepared as described above were each sprayed onto 3 pots of young plant in an amount of 20 ml per one pot.

After spraying, the plants were placed in a glass house for 2 days, and then a wheat brown rust (Puccinia recondita) spore suspension (7 x $10^4$ spores/ml) was uniformly inoculated on the plants by spraying thereon.

After inoculation, the plants were placed in a thermostat at 20 °C with a relative humidity of 100 % for 20 hours and then grown in a glass house for one week at 20 °C, and the extent of the wheat brown rust lesion appeared on the first leave was examined.

The drug effect was judged by comparison with the extent of the non-treated group in the 6 ranks of 5 to 0, and one which is wholly afflicted with the disease being rated as 0, one with lesion area of about 60 % as compared with the non-treated group as 1, about 40 % as 2, about 20 % as 3, 10 % or less as 4 and one without lesion being rated as 5. The results are shown in Table 4. In the column of chemical injury, "None" indicates no chemical injury.

Table 4

| Test Compound No. | Distributed concentration (active ingredient: ppm) | Activity | Chemical injury |
|---|---|---|---|
| (Single application area) | | | |
| Compound 4 | 10 | 2 | None |
| Compound 5 | 10 | 2 | None |
| Compound 6 | 10 | 3 | None |
| Compound A | 20 | 1 | None |
| Compound B | 10 | 2 | None |
| Compound C | 10 | 2 | None |
| Compound D | 10 | 2 | None |
| Compound E | 10 | 2 | None |
| Compound F | 20 | 1 | None |
| Compound G | 20 | 1 | None |
| Compound H | 30 | 1 | None |
| Compound I | 50 | 1 | None |
| Compound J | 10 | 2 | None |
| (This invention's area) | | | |
| Compound 4 + Compound A | 10 + 20 | 5 | None |
| Compound 4 + Compound A | 5 + 10 | 5 | None |
| Compound 5 + Compound A | 10 + 20 | 5 | None |
| Compound 5 + Compound A | 5 + 10 | 5 | None |
| Compound 6 + Compound A | 10 + 20 | 5 | None |
| Compound 6 + Compound A | 5 + 10 | 5 | None |

Table 4 (Cont'd)

| Test Compound No. | Distributed concentration (active ingredient: ppm) | Activity | Chemical injury |
|---|---|---|---|
| Compound 4 + Compound B | 10 + 10 | 5 | None |
| Compound 4 + Compound B | 5 + 5 | 5 | None |
| Compound 5 + Compound B | 10 + 10 | 5 | None |
| Compound 5 + Compound B | 5 + 5 | 5 | None |
| Compound 6 + Compound B | 10 + 10 | 5 | None |
| Compound 6 + Compound B | 5 + 5 | 5 | None |
| Compound 4 + Compound C | 10 + 10 | 5 | None |
| Compound 4 + Compound C | 5 + 5 | 5 | None |
| Compound 5 + Compound C | 10 + 10 | 5 | None |
| Compound 5 + Compound C | 5 + 5 | 5 | None |
| Compound 6 + Compound C | 10 + 10 | 5 | None |
| Compound 6 + Compound C | 5 + 5 | 5 | None |
| Compound 4 + Compound D | 10 + 10 | 5 | None |
| Compound 4 + Compound D | 5 + 5 | 5 | None |
| Compound 5 + Compound D | 10 + 10 | 5 | None |
| Compound 5 + Compound D | 5 + 5 | 5 | None |
| Compound 6 + Compound D | 10 + 10 | 5 | None |
| Compound 6 + Compound D | 5 + 5 | 5 | None |

Table 4 (Cont'd)

| Test Compound No. | Distributed concentration (active ingredient: ppm) | Activity | Chemical injury |
|---|---|---|---|
| Compound 4 + Compound E | 10 + 10 | 5 | None |
| Compound 4 + Compound E | 5 + 5 | 5 | None |
| Compound 5 + Compound E | 10 + 10 | 5 | None |
| Compound 5 + Compound E | 5 + 5 | 5 | None |
| Compound 6 + Compound E | 10 + 10 | 5 | None |
| Compound 6 + Compound E | 5 + 5 | 5 | None |
| Compound 4 + Compound F | 10 + 20 | 5 | None |
| Compound 4 + Compound F | 5 + 10 | 5 | None |
| Compound 5 + Compound F | 10 + 20 | 5 | None |
| Compound 5 + Compound F | 5 + 10 | 5 | None |
| Compound 6 + Compound F | 10 + 20 | 5 | None |
| Compound 6 + Compound F | 5 + 10 | 5 | None |
| Compound 4 + Compound G | 10 + 20 | 5 | None |
| Compound 4 + Compound G | 5 + 10 | 5 | None |
| Compound 5 + Compound G | 10 + 20 | 5 | None |
| Compound 5 + Compound G | 5 + 10 | 5 | None |
| Compound 6 + Compound G | 10 + 20 | 5 | None |
| Compound 6 + Compound G | 5 + 10 | 5 | None |

Table 4 (Cont'd)

| Test Compound No. | Distributed concentration (active ingredient: ppm) | Activity | Chemical injury |
|---|---|---|---|
| Compound 4 + Compound H | 10 + 30 | 5 | None |
| Compound 4 + Compound H | 5 + 15 | 5 | None |
| Compound 5 + Compound H | 10 + 30 | 5 | None |
| Compound 5 + Compound H | 5 + 15 | 5 | None |
| Compound 6 + Compound H | 10 + 30 | 5 | None |
| Compound 6 + Compound H | 5 + 15 | 5 | None |
| Compound 4 + Compound I | 10 + 50 | 5 | None |
| Compound 4 + Compound I | 5 + 25 | 5 | None |
| Compound 5 + Compound I | 10 + 50 | 5 | None |
| Compound 5 + Compound I | 5 + 25 | 5 | None |
| Compound 6 + Compound I | 10 + 50 | 5 | None |
| Compound 6 + Compound I | 5 + 25 | 5 | None |
| Compound 4 + Compound J | 10 + 10 | 5 | None |
| Compound 4 + Compound J | 5 + 5 | 5 | None |
| Compound 5 + Compound J | 10 + 10 | 5 | None |
| Compound 5 + Compound J | 5 + 5 | 5 | None |
| Compound 6 + Compound J | 10 + 10 | 5 | None |
| Compound 6 + Compound J | 5 + 5 | 5 | None |

Example 7

Control activity (preventive activity) test against barley powdery mildew

Predetermined amounts of the wettable powders prepared in Example 5 were each diluted with water containing a surfactant (0.01 %) to obtain solutions of Compounds Nos. A to J. These solutions were mixed with Compounds Nos. 4, 5 or 6 to prepare fungicidal compositions, and used for the tests shown below in the predetermined active ingredient concentration as shown in Table 5.

In plastic planting pots of 6 cm in diameter, ten barleys (species: Black barley) were grown per each pot until the 1.5 leaf stage young plant.

The solutions of the fungicidal compositions with the predetermined active ingredient concentration prepared as described above were sprayed onto 3 pots of young plants in an amount of 20 ml per one pot.

After spraying, the plants were grown in a glass house for 2 days at 20 °C, and then emulsion of barley powdery mildew (Erysiphe graminis) conidial spores collected from the afflicted leaves were sprayed uniformly on the plants to effect inoculation.

After inoculation, the plants were grown in a glass house for one week at 20 °C, and the extent of the barley powdery mildew lesion appeared on the first leave was examined. The drug effect was judged by the same evaluation method as in Example 6. The results are shown in Table 5.

Table 5

| Test Compound No. | Distributed concentration (active ingredient: ppm) | Activity | Chemical injury |
|---|---|---|---|
| (Single application area) | | | |
| Compound 4 | 10 | 2 | None |
| Compound 5 | 10 | 2 | None |
| Compound 6 | 10 | 3 | None |
| Compound A | 20 | 2 | None |
| Compound B | 10 | 2 | None |
| Compound C | 10 | 3 | None |
| Compound D | 10 | 2 | None |
| Compound E | 10 | 2 | None |
| Compound F | 20 | 2 | None |
| Compound G | 20 | 2 | None |
| Compound H | 30 | 2 | None |
| Compound I | 50 | 2 | None |
| Compound J | 10 | 2 | None |
| (This invention's area) | | | |
| Compound 4 + Compound A | 10 + 20 | 5 | None |
| Compound 4 + Compound A | 5 + 10 | 5 | None |
| Compound 5 + Compound A | 10 + 20 | 5 | None |
| Compound 5 + Compound A | 5 + 10 | 5 | None |

Table 5 (Cont'd)

| Test Compound No. | Distributed concentration (active ingredient: ppm) | Activity | Chemical injury |
|---|---|---|---|
| Compound 6 + Compound A | 10 + 20 | 5 | None |
| Compound 6 + Compound A | 5 + 10 | 5 | None |
| Compound 4 + Compound B | 10 + 10 | 5 | None |
| Compound 4 + Compound B | 5 + 5 | 5 | None |
| Compound 5 + Compound B | 10 + 10 | 5 | None |
| Compound 5 + Compound B | 5 + 5 | 4 | None |
| Compound 6 + Compound B | 10 + 10 | 5 | None |
| Compound 6 + Compound B | 5 + 5 | 5 | None |
| Compound 4 + Compound C | 10 + 10 | 5 | None |
| Compound 4 + Compound C | 5 + 5 | 5 | None |
| Compound 5 + Compound C | 10 + 10 | 5 | None |
| Compound 5 + Compound C | 5 + 5 | 5 | None |
| Compound 6 + Compound C | 10 + 10 | 5 | None |
| Compound 6 + Compound C | 5 + 5 | 5 | None |
| Compound 4 + Compound D | 10 + 10 | 5 | None |
| Compound 4 + Compound D | 5 + 5 | 5 | None |
| Compound 5 + Compound D | 10 + 10 | 5 | None |
| Compound 5 + Compound D | 5 + 5 | 5 | None |
| Compound 6 + Compound D | 10 + 10 | 5 | None |
| Compound 6 + Compound D | 5 + 5 | 5 | None |

Table 5 (Cont'd)

| Test Compound No. | Distributed concentration (active ingredient: ppm) | Activity | Chemical injury |
|---|---|---|---|
| Compound 4 + Compound E | 10 + 10 | 5 | None |
| Compound 4 + Compound E | 5 + 5 | 5 | None |
| Compound 5 + Compound E | 10 + 10 | 5 | None |
| Compound 5 + Compound E | 5 + 5 | 5 | None |
| Compound 6 + Compound E | 10 + 10 | 5 | None |
| Compound 6 + Compound E | 5 + 5 | 5 | None |
| Compound 4 + Compound F | 10 + 20 | 5 | None |
| Compound 4 + Compound F | 5 + 10 | 5 | None |
| Compound 5 + Compound F | 10 + 20 | 5 | None |
| Compound 5 + Compound F | 5 + 10 | 4 | None |
| Compound 6 + Compound F | 10 + 20 | 5 | None |
| Compound 6 + Compound F | 5 + 10 | 4 | None |
| Compound 4 + Compound G | 10 + 20 | 5 | None |
| Compound 4 + Compound G | 5 + 10 | 5 | None |
| Compound 5 + Compound G | 10 + 20 | 5 | None |
| Compound 5 + Compound G | 5 + 10 | 5 | None |
| Compound 6 + Compound G | 10 + 20 | 5 | None |
| Compound 6 + Compound G | 5 + 10 | 5 | None |

Table 5 (Cont'd)

| Test Compound No. | Distributed concentration (active ingredient: ppm) | Activity | Chemical injury |
|---|---|---|---|
| Compound 4 + Compound H | 10 + 30 | 5 | None |
| Compound 4 + Compound H | 5 + 15 | 5 | None |
| Compound 5 + Compound H | 10 + 30 | 5 | None |
| Compound 5 + Compound H | 5 + 15 | 4 | None |
| Compound 6 + Compound H | 10 + 30 | 5 | None |
| Compound 6 + Compound H | 5 + 15 | 5 | None |
| Compound 4 + Compound I | 10 + 50 | 5 | None |
| Compound 4 + Compound I | 5 + 25 | 5 | None |
| Compound 5 + Compound I | 10 + 50 | 5 | None |
| Compound 5 + Compound I | 5 + 25 | 4 | None |
| Compound 6 + Compound I | 10 + 50 | 5 | None |
| Compound 6 + Compound I | 5 + 25 | 4 | None |
| Compound 4 + Compound J | 10 + 10 | 5 | None |
| Compound 4 + Compound J | 5 + 5 | 5 | None |
| Compound 5 + Compound J | 10 + 10 | 5 | None |
| Compound 5 + Compound J | 5 + 5 | 5 | None |
| Compound 6 + Compound J | 10 + 10 | 5 | None |
| Compound 6 + Compound J | 5 + 5 | 5 | None |

Example 8

Control activity (preventive activity) test against cucumber powdery mildew

Predetermined amounts of the wettable powders prepared in Example 5 were diluted with water containing a surfactant (0.01 %) to obtain respective solutions of Compounds Nos. A to J. These solutions were admixed with Compounds Nos. 4, 5 or 6 to prepare fungicidal compositions and used for the tests shown below in the predetermined active ingredient concentration as shown in Table 6.

In plastic planting pots of 6 cm in diameter, one cucumber (species: Sagamihanjiro Tokinari) was seeded per each pot and grown for 15 days to prepare pots each having one grown young plant.

Respective solutions of the fungicidal composition with the predetermined active ingredient concentrations prepared as described above were sprayed onto 3 pots of each young plants in an amount of 20 ml per one pot.

After spraying, the plants were placed in a glass house for 2 days at 20 °C. Then, emulsions of cucumber powdery mildew (Sphaerotheca fuliginea) showing resistance to Compounds Nos. A and D and those showing sensitivity thereto were prepared to be 100,000 spores/ml in spores concentration and were then sprayed uniformly on the young plants in an amount of 1 ml per one pot to effect inoculation.

After inoculation, the plants were grown in a glass house for 10 days at 20 °C, and the extent of the cucumber powdery mildew lesion appeared on the first leave was examined. The preventive percentage was obtained by the calculation method as shown below.

$$\text{Control percentage (\%)} = \left[1 - \frac{\text{Average lesion number in treated area}}{\text{Average lesion number in non-treated area}}\right] \times 100$$

The results are shown in Table 6. In the column of chemical injury, "None" indicates no chemical injury, and "Ret.", growth retardant.

Table 6

| Test compound No. | Distributed concentration (Active ing-resient: ppm) | Control percentage (%) Resistant strain | Sensitive strain | Chemical injury |
|---|---|---|---|---|
| (Single application area) | | | | |
| Compound 4 | 16 | 100 | 100 | None |
| Compound 4 | 8 | 75 | 66 | None |
| Compound 4 | 4 | 35 | 38 | None |
| Compound 5 | 16 | 100 | 100 | None |
| Compound 5 | 8 | 62 | 54 | None |
| Compound 5 | 4 | 37 | 33 | None |
| Compound 6 | 16 | 100 | 100 | None |
| Compound 6 | 8 | 76 | 68 | None |
| Compound 6 | 4 | 36 | 31 | None |
| Compound A | 20 | 8 | 100 | Growth retar-dation |
| Compound A | 10 | 5 | 63 | None |
| Compound A | 5 | 3 | 51 | None |
| Compound D | 20 | 27 | 100 | Growth retar-dation |
| Compound D | 10 | 11 | 80 | None |
| Compound D | 5 | 6 | 56 | None |

Table 6 (Cont'd)

| Test compound No. | Distributed concentration (Active ingresient: ppm) | Control percentage (%) Resistant strain | Sensitive strain | Chemical injury |
|---|---|---|---|---|
| (This invention's area) | | | | |
| Compound 4 + Compound A | 8 + 20 | 100 | 100 | None |
| Compound 4 + Compound A | 4 + 10 | 97 | 96 | None |
| Compound 5 + Compound A | 8 + 20 | 100 | 100 | None |
| Compound 5 + Compound A | 4 + 10 | 95 | 93 | None |
| Compound 6 + Compound A | 8 + 20 | 100 | 100 | None |
| Compound 6 + Compound A | 4 + 10 | 97 | 97 | None |
| Compound 4 + Compound D | 8 + 20 | 100 | 100 | None |
| Compound 4 + Compound D | 4 + 10 | 100 | 100 | None |
| Compound 5 + Compound D | 8 + 20 | 100 | 100 | None |
| Compound 5 + Compound D | 4 + 10 | 98 | 100 | None |
| Compound 6 + Compound D | 8 + 20 | 100 | 100 | None |
| Compound 6 + Compound D | 4 + 10 | 99 | 100 | None |

As will be apparent from the above results, the fungicidal composition of the present invention shows remarkably enhanced fungicidal activity as compared with the case using a single compound of the compounds of the formula (I) or Compound Nos. A to L, and thus the drug amount can be reduced and generation of chemical injury can be depressed.

Example 9 (Preparation of wettable powder)

10 parts by weight of fungicidal compounds Nos. K and L having cytokinesis inhibitive activity were

each mixed uniformly with 88 parts by weight of Kaolin and 2 parts by weight of Neopelex powder (trade name; manufactured by Kao Atlas) and then pulverized to obtain respective wettable powders.

Example 10

Control activity (preventive activity) test against barley powdery mildew

As Compound No. K, "Topjin M wettable powder" (manufactured by Hokko Kagaku Kogyo K.K.; Active ingredient = 70 %) was used. As Compound No. L, "Benlate wettable powder" (manufactured by Du Pond Co.; Active ingredient = 50 %) was used.

Predetermined amounts of these wettable powders were each diluted with water containing a surfactant (0.01 %) to obtain solutions of Compounds Nos. K or L. These solutions were each mixed with Compounds Nos. 4, 5 or 6 to prepare fungicidal compositions and used for the tests shown below in the predetermined active ingredient concentration as shown in Table 7.

In plastic planting pots of 6 cm in diameter, ten barleys (species: Black barley) were grown per each pot until the 1.5 leaf stage young plant.

Respective solutions of the fungicidal compositions prepared as described above with the predetermined active ingredient concentration were sprayed onto 3 pots of young plants in 20 ml per one pot.

After spraying, the plants were grown in a glass house for 2 days at 20 °C, and then suspension of barley powdery mildew (Erysiphe graminis) conidial spores collected from the afflicted leaves was sprayed uniformly on the plants to effect inoculation.

After inoculation, the plants were grown in a glass house for one week at 20 °C, and the extent of the barley powdery mildew lesion appeared on the first leave was examined.

The drug effect was indicated by comparison with the extent of the non-treated group by the 6 ranks, and one which is wholly afflicted with the disease as 0, one with lesion area of about 60 % as compared with the non-treated group as 1, about 40 % as 2, about 20 % as 3, 10 % or less as 4, one without lesion being rated as 5. The results are shown in Table 7. In the column of chemical injury, "None" indicates no chemical injury.

Table 7

| Test Compound No. | Distributed concentration (active ingredient: ppm) | Activity | Chemical injury |
|---|---|---|---|
| (Single application area) | | | |
| Compound 4 | 10 | 2 | None |
| Compound 5 | 10 | 2 | None |
| Compound 6 | 10 | 3 | None |
| Compound K | 50 | 2 | None |
| Compound L | 50 | 1 | None |
| (This invention's area) | | | |
| Compound 4 + Compound K | 10 + 50 | 5 | None |
| Compound 4 + Compound K | 5 + 25 | 5 | None |
| Compound 5 + Compound K | 10 + 50 | 5 | None |
| Compound 5 + Compound K | 5 + 25 | 4 | None |
| Compound 6 + Compound K | 10 + 50 | 5 | None |
| Compound 6 + Compound K | 5 + 25 | 4 | None |
| Compound 4 + Compound L | 10 + 50 | 5 | None |
| Compound 4 + Compound L | 5 + 25 | 4 | None |
| Compound 5 + Compound L | 10 + 50 | 5 | None |
| Compound 5 + Compound L | 5 + 25 | 4 | None |
| Compound 6 + Compound L | 10 + 50 | 5 | None |
| Compound 6 + Compound L | 5 + 25 | 4 | None |

Example 11

Control activity (preventive activity) test against cucumber powdery mildew

Predetermined amounts of the wettable powders prepared in Example 9 were diluted with water containing a surfactant (0.01 %) to obtain solutions of Compounds Nos. A to J. These solutions were each mixed with Compounds Nos. 4, 5 or 6 to prepare fungicidal compositions and further used for the test

shown below in the predetermined active ingredient concentration as shown in Table 8.

As Compound No. A, Topjin M wettable powder (manufactured by Hokko Kagaku Kogyo K.K.; Active ingredient = 70 %) was used.

Predetermined amount of the wettable powder was diluted with water containing a surfactant (0.01 %) to obtain a solution of Compound No. A. The solution was mixed with Compound Nos. 4, 5 or 6 to prepare fungicidal compositions and was used for the test shown below in the predetermined concentration of the active ingredients as shown in Table 8.

In plastic planting pots of 6 cm in diameter, one cucumber (species: Sagamihanjiro Tokinari) was seeded and grown for 15 days to prepare pots each having one grown young plant.

Respective solutions of fungicidal compositions prepared as described above with the predetermined active ingredient concentration were each sprayed onto 3 pots of young plants in 20 ml for one pot.

After spraying, the plants were placed in a glass house for 2 days at 20 °C. Then, suspensions of cucumber powdery mildew (Sphaerotheca fuliginea) showing resistance against Compounds Nos. A and D and those showing sensitivity thereto were prepared to be 100,000 spores/ml in spores concentration, which were then sprayed uniformly on the young plants in an amount of 1 ml per one pot to effect inoculation.

After inoculation, the plants were grown in a glass house for 10 days at 20 °C, and the extent of the cucumber powdery mildew lesion appeared on the first leave was examined. The control percentage (%) was obtained by the calculation method as shown below.

$$\text{Control percentage (\%)} = \left[1 - \frac{\text{Average lesion number in treated area}}{\text{Average lesion number in non-treated area}}\right] \times 100$$

The results are shown in Table 8. In the column of chemical injury, "None" indicates no chemical injury, and "Ret.", growth retardant.

Table 8

| Test compound No. | Distributed concentration (Active ing-resient: ppm) | Control percentage (%) Resistant strain | Sensitive strain | Chemical injury |
|---|---|---|---|---|
| (Single application area) | | | | |
| Compound 4 | 16 | 100 | 100 | None |
| Compound 4 | 8 | 75 | 66 | None |
| Compound 4 | 4 | 35 | 38 | None |
| Compound 5 | 16 | 100 | 100 | None |
| Compound 5 | 8 | 62 | 54 | None |
| Compound 5 | 4 | 37 | 33 | None |
| Compound 6 | 16 | 100 | 100 | None |
| Compound 6 | 8 | 76 | 68 | None |
| Compound 6 | 4 | 36 | 31 | None |
| Compound K | 80 | 31 | 91 | None |
| Compound K | 40 | 19 | 72 | None |
| Compound K | 20 | 4 | 46 | None |
| (This invention's area) | | | | |
| Compound 4 + Compound K | 8 + 40 | 100 | 100 | None |
| Compound 4 + Compound K | 4 + 20 | 96 | 92 | None |

Table 8 (Cont'd)

| Test compound No. | Distributed concentration (Active ing-resient: ppm) | Control percentage (%) | | Chemical injury |
|---|---|---|---|---|
| | | Resistant strain | Sensitive strain | |
| Compound 5 + Compound K | 8 + 40 | 100 | 100 | None |
| Compound 5 + Compound K | 4 + 20 | 92 | 95 | None |
| Compound 6 + Compound K | 8 + 40 | 100 | 100 | None |
| Compound 6 + Compound K | 4 + 20 | 96 | 99 | None |

The fungicidal compositions of the present invention can show the remarkably enhanced fungicidal activity as compared with the case using the compounds singly. Thus the drug amount used can be reduced and generation of chemical injury can be depressed.

## Claims

1. A fungicidal composition containing a compound represented by the formula (I):

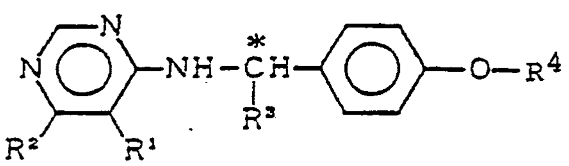

(I)

wherein $R^1$ represents a halogen atom and $R^2$ and $R^3$ each represent a lower alkyl group, and $R^4$ represents

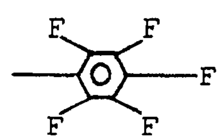

or $-CHF_2$, or an acid addition salt thereof, and at least one fungicide having ergosterol biosynthesis inhibitive activity or cytokinesis inhibitive activity.

2. The fungicidal composition according to Claim 1, wherein the halogen atom is at least one selected from the group consisting of fluorine, chlorine, bromine and iodine.

3. The fungicidal composition according to Claim 1, wherein the halogen atom is at least one of chlorine and fluorine.

4. The fungicidal composition according to Claim 1, wherein the lower alkyl group is at least one selected

from the group consisting of straight chain or branched alkyl groups having 1 to 4 carbon atoms.

**5.** The fungicidal composition according to Claim 1, wherein the lower alkyl group is at least one of methyl group and ethyl group.

**6.** The fungicidal composition according to Claim 1, wherein the compound represented by the formula (I) is a compound represented by the formula (I') shown below:

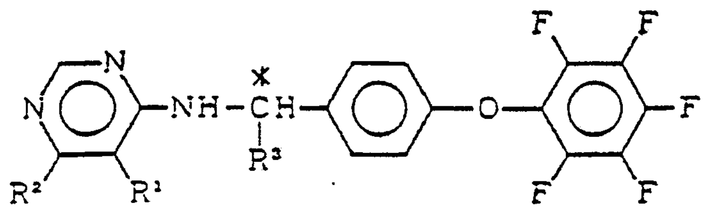

(I')

**7.** The fungicidal composition according to Claim 6, wherein the compound represented by the formula (I') is at least one selected from the group consisting of dl-5-Chloro-6-ethyl-4-(α-ethyl-4-pentafluorophenoxybenzylamino)-pyrimidine, dl-5-Chloro-6-methyl-4-(α-ethyl-4-pentafluorophenoxybenzyl-amino)-pyrimidine and dl-5-Fluoro-6-methyl-4-(α-methyl-4-pentafluorophenoxybenzylamino)pyrimidine.

**8.** The fungicidal composition according to Claim 1, wherein the compound represented by the formula (I) is a compound represented by the formula (I") shown below:

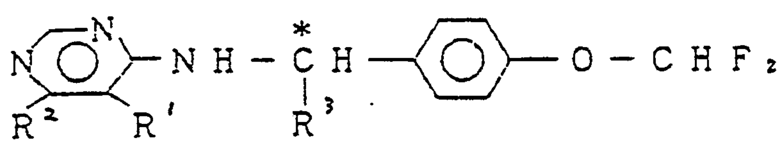

(I")

**9.** The fungicidal composition according to Claim 8, wherein the compound represented by the formula (I") is at least one selected from the group consisting of dl-5-Chloro-6-methyl-4-(α-ethyl-4-difluoromethoxybenzylamino)pyrimidine, dl-5-Chloro-6-methyl-4(α-methyl-4-difluoromethoxybenzyl-amino)pyrimidine and dl-5-Chloro-6-ethyl-4-(α-methyl-4-difluoromethoxybenzyl-amino)pyrimidine.

**10.** The fungicidal composition according to Claim 1, wherein the acid addition salt of the compound represented by the formula (I) is formed by the compound represented by the formula (I) with at least one acid selected from the group consisting of inorganic acid, carboxylic acids, organic sulfonic acid and, saccharin.

**11.** The fungicidal composition according to Claim 1, wherein the acid addition salt of the compound represented by the formula (I) is formed by the compound represented by the formula (I) with at least one acid selected from the group consisting of hydrochloric acid, hydrobromic acid, nitric acid, sulfuric acid, phosphoric acid, formic acid, oxalic acid, fumaric acid, adipic acid, stearic acid, oleic acid, aconitic acid, methanesulfonic acid, benzenesulfonic acid, p-toluene-sulfonic acid and saccharin.

**12.** The fungicidal composition according to Claim 1, wherein the fungicide having ergosterol biosynthesis inhibitive activity or cytokinesis inhibitive activity is at least one selected from the group consisting of Compounds Nos. A to L shown below:

Triadimefon (Compound No. A)

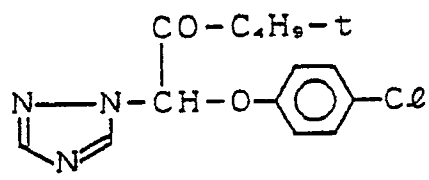

Hexaconazole (Compound No. B)

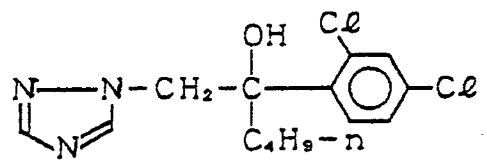

Flusirazole (Compound No. C)

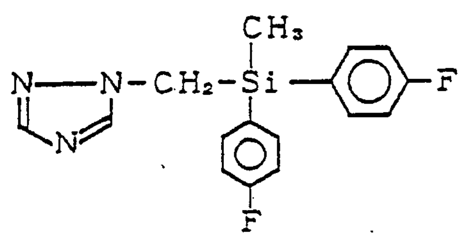

Propiconazole (Compound No. D)

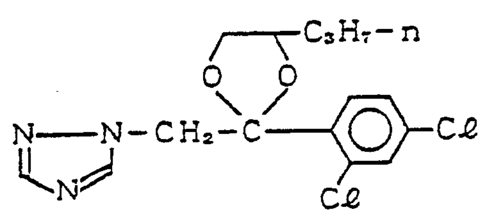

Ethaconazole (Compound No. E)

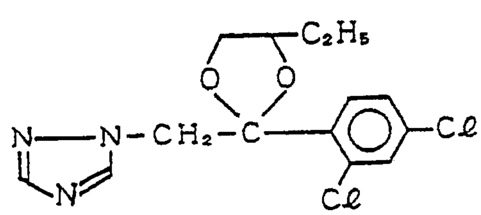

Prochloraz (Compound No. F)

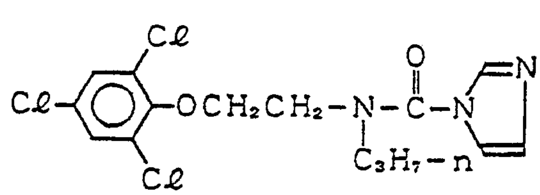

Triflumizole (Compound No. G)

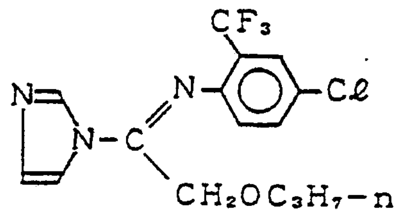

Dodemorph (Compound No. H)

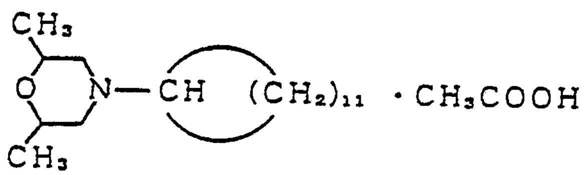

Tridemorph (Compound No. I)

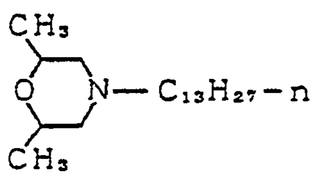

Fenpropimorph (Compound No. J)

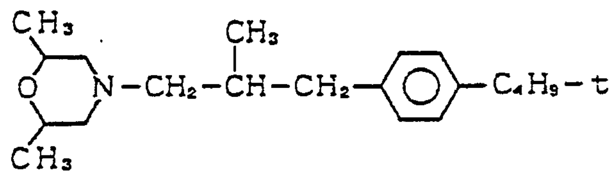

Thiophanatemethyl (Compound No. K)

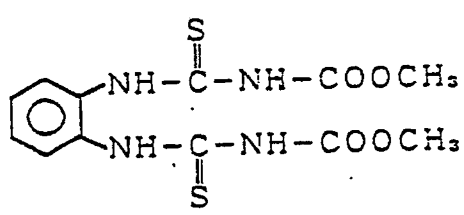

Benomyl (Compound No. L)

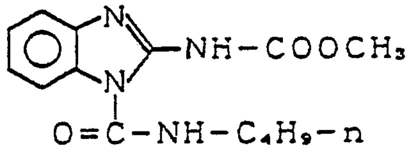

13. The fungicidal composition according to Claim 1, wherein the fungicide having ergosterol biosynthesis inhibitive activity or cytokinesis inhibitive activity is incorporated in the ratio of 0.1 to 10 to 1 of the compound of the formula (I).

14. The fungicidal composition according to Claim 1, wherein the fungicide having ergosterol biosynthesis inhibitive activity or cytokinesis inhibitive activity is incorporated in the ratio of 1 to 5 to 1 of the compound of the formula (I)

European Patent Office

# EUROPEAN SEARCH REPORT

Application Number

**EP 90 31 2145**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 516 349 (ICI)<br>– – – | | A 01 N 43/54 // (A 01 N 43/54 A 01 N 55:00 A 01 N 47:38 A 01 N 47:34 A 01 N 43:84 A 01 N 43:653 A 01 N 43:50 ) |
| A | EP-A-0 264 217 (UBE INDUSTRIES)<br>– – – | | |
| A,P | EP-A-0 370 704 (UBE INDUSTRIES)<br>– – – – – – | | |
| | | | **TECHNICAL FIELDS SEARCHED (Int. Cl.5)** |
| | | | A 01 N |

The present search report has been drawn up for all claims

| Place of search | Date of completion of search | Examiner |
|---|---|---|
| The Hague | 21 March 91 | DECORTE D. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document